(19) Europäisches Patentamt European Patent Office Office européen des brevets

(11) **EP 4 755 658 A1**

(12) **EUROPEAN PATENT APPLICATION**

(43) Date of publication:
**10.06.2026 Bulletin 2026/24**

(21) Application number: **25217621.9**

(22) Date of filing: **21.11.2025**

(51) International Patent Classification (IPC):
**B60C 3/00** (2006.01)   **B60C 11/00** (2006.01)
**B60C 11/03** (2006.01)   **B60C 3/04** (2006.01)
**B60C 9/22** (2006.01)

(52) Cooperative Patent Classification (CPC):
**B60C 11/0083; B60C 3/00; B60C 3/04;**
**B60C 11/0332;** B60C 9/2204

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **05.12.2024 JP 2024211926**

(71) Applicant: **SUMITOMO RUBBER INDUSTRIES,**
**LTD.**
**Kobe-shi, Hyogo 651-0072 (JP)**

(72) Inventors:
• **MURATA, NAO**
  **Hyogo 651-0072 (JP)**
• **UNO, HIROKI**
  **Hyogo 651-0072 (JP)**

(74) Representative: **Forresters IP LLP**
**Skygarden**
**Erika-Mann-Straße 11**
**80636 München (DE)**

(54) **TIRE**

(57) A tire 2 includes a tread 4 and a band 16. The tread 4 has an outer surface 4G including a crown portion 64, a pair of middle portions 66, and a pair of shoulder portions 68. The crown portion 64 has a contour represented by an arc having a radius TR1 not less than 5 times and not greater than 7 times an axial width Wa of a ground-contact surface of the tire 2 in a standard state.

The band 16 includes a band cord 56 composed of an organic fiber cord. At a position corresponding to 70% of a maximum width SW of the tire 2 in the standard state, the band cord 56 has a contraction ratio SRs not less than 70% and not greater than 130% of a contraction ratio SRc of the band cord 56 on an equator plane of the tire 2.

FIG. 3

EP 4 755 658 A1

## Description

### TECHNICAL FIELD

The present invention relates to tires. The present invention relates specifically to tires mounted to passenger vehicles.

### BACKGROUND ART

Tires expected to be used at a speed not less than 270 km/h need to have excellent high-speed durability.

For example, Japanese Laid-Open Patent Publication No. 2016-041563 (PATENT LITERATURE 1) discloses a profile of an outer surface of a tread for improvement in high-speed durability.

### SUMMARY OF THE INVENTION

[TECHNICAL PROBLEM]

An object of the present invention is to provide a tire that can achieve improvement in high-speed durability as well as suppression of an impact on rolling resistance.

[SOLUTION TO PROBLEM]

The present invention provides a tire including a pair of beads, a carcass extending between the pair of beads, a tread positioned radially outside the carcass and configured to come into contact with a road surface, a belt positioned radially inside the tread and radially outside the carcass, and a band positioned radially between the tread and the belt. A state where the tire is fitted on a normal rim and an internal pressure of the tire is adjusted to 92% of a normal internal pressure, and no load is applied to the tire is a standard state. The tread has an outer surface including a crown portion positioned at an axial center, a pair of middle portions positioned axially outside the crown portion, and a pair of shoulder portions positioned axially outside the middle portions, respectively. In a meridian cross-section of the tire in the standard state, the crown portion has a contour represented by an arc having a center on an equator plane, Each of the middle portions each has a contour represented by an arc tangent to the arc representing the contour of the crown portion, and each of the shoulder portions has a contour represented by an arc tangent to the arc representing the contour of the middle portion. Positions on an outer surface of the tire corresponding to axially outer ends of a ground-contact surface of the tire obtained by applying a vertical load of 75% of a normal load to the tire in the standard state and bringing the tire into contact with a flat surface are ground-contact reference ends, and an axial distance from first one of the ground-contact reference ends to second one of the ground-contact reference ends in the tire is an axial width Wa of the ground-contact surface. The arc representing the contour of the crown portion has a radius TR1 not less than 5 times and not greater than 7 times the axial width Wa. The belt includes a belt cord inclined from a circumferential direction. The belt cord is a steel cord. The band includes a band cord extending substantially in the circumferential direction. The band cord is an organic fiber cord. At a position corresponding to 70% of a maximum width of the tire in the standard state, the band cord has a contraction ratio not less than 70% and not greater than 130% of a contraction ratio of the band cord on the equator plane of the tire.

[ADVANTAGEOUS EFFECTS OF THE INVENTION]

The present invention provides a tire that can achieve improvement in high-speed durability as well as suppression of an impact on rolling resistance.

### BRIEF DESCRIPTION OF DRAWINGS

FIG. 1 is a sectional view showing part of a tire according to an embodiment of the present invention.
FIG. 2 is an explanatory view of configurations of a belt and a band,
FIG. 3 is a sectional view showing a contour of an outer surface of a tread,
FIG. 4 is a schematic view showing an exemplary ground-contact surface of the tire,
FIG. 5 is a perspective view showing part of a band strip used to form the band,
FIG. 6 is a sectional view showing part of the contour of the outer surface in FIG. 3,
FIG. 7 is an explanatory view on a method of measuring a contraction ratio of a band cord, and

FIG. 8 is another explanatory view on the method of measuring the contraction ratio of the band cord.

## DETAILED DESCRIPTION

Description is made in detail hereinafter to a preferred embodiment of the present invention with reference to the drawings as appropriate.

A tire according to the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to normal internal pressure, and no load is applied to the tire is referred to as normal state. In contrast, a state where a tire is fitted on a normal rim, the internal pressure of the tire is adjusted to 92% of the normal internal pressure, and no load is applied to the tire is referred to as standard state.

In the present invention, unless otherwise specified, sizes and angles of components of the tire are measured in the standard state.

The sizes and angles of the components in a meridian cross-section of the tire, which cannot be measured in the state where the tire is fitted on the normal rim, are measured in a cut plane of the tire obtained by cutting the tire along a plane including a rotation axis. In this measurement, the tire is set such that the distance between right and left beads is equal to the distance between the beads in the tire fitted on the normal rim. The configuration of the tire that cannot be checked in the state where the tire is fitted on the normal rim is checked in the cut plane described above.

The normal rim means a rim specified in a standard on which the tire is based. The "standard rim" in the JATMA standard, the "design rim" in the TRA standard, and the "measuring rim" in the ETRTO standard are normal rims.

The normal internal pressure means internal pressure specified in the standard on which the tire is based. The "highest air pressure" in the JATMA standard, the "maximum value" recited in the "tire load limits at various cold inflation pressures" in the TRA standard, and the "inflation pressure" in the ETRTO standard are the normal internal pressure.

A normal load means a load specified in the standard on which the tire is based. The "maximum load capacity" in the JATMA standard, the "maximum value" recited in the "tire load limits at various cold inflation pressures" in the TRA standard, and the "load capacity" in the ETRTO standard are the normal load.

The present invention refers to a speed symbol as a symbol representing the maximum speed of a tire that can run in a state where weight indicated by a road index is loaded under a prescribed condition. The speed symbol is prescribed in the JATMA standard or the like. A tire having a speed symbol not less than W means a tire having a speed symbol of W or Y.

As to be described later, a band according to the present invention is formed by spirally winding a band cord being loaded. Tension generated by applying the load to the band cord is applied to the tire as holding force.

The band cord in the band of the tire is in a stretched state. The band cord released from the tire contracts. The band cord has a contraction ratio reflecting the holding force of the band in the tire.

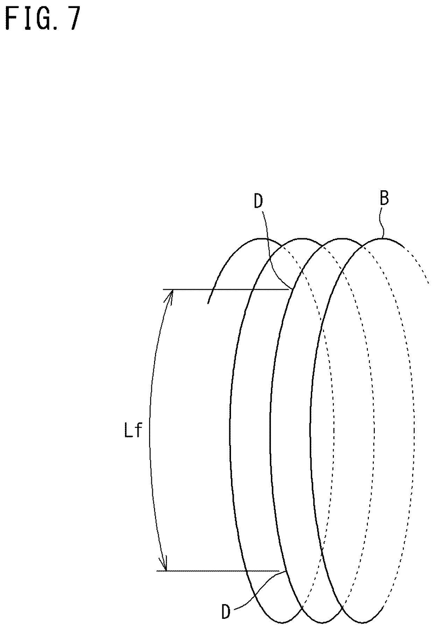

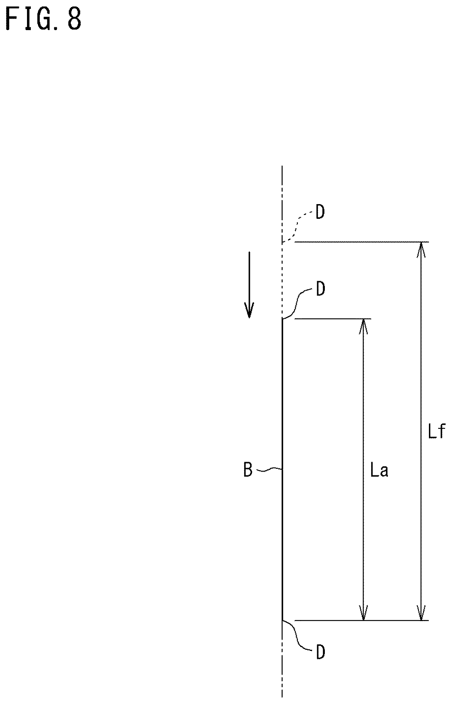

The contraction ratio of the band cord is measured in the following manner in the present invention. A method of measuring the contraction ratio is described with reference to FIG. 7 and FIG. 8.

The band of the tire includes the spirally wound band cord. FIG. 7 schematically shows a state of a band cord B in a band of a tire.

A tread of the tire is initially exfoliated to expose the band cord B for contraction ratio measurement. Length of the band cord B thus exposed is measured, and gauge marks D indicating a length Lf (e.g., 100 cm) as a reference are drawn on the band cord B. The band cord B is then exfoliated from the tire and stands still for 24 hours in an environment having temperature within a range from 20°C to 30°C. As shown in FIG. 8, a distance between the bench marks provided on the band cord B having stood still is measured to obtain a length La of the band cord B having been contracted. A contraction ratio SR (unit: %) is calculated in accordance with the following expression.

$$SR\ (\%) = (Lf - La)/Lf \times 100$$

The larger the contraction ratio SR is, the higher the holding force of the band is, whereas the smaller the contraction ratio SR is, the lower the holding force of the band is.

In the present invention, a tread portion of a tire is a part of the tire which comes into contact with a road surface. A bead portion is a part of the tire which is fitted to a rim. A sidewall portion is a part of the tire which extends between the tread portion and the bead portion. A tire includes, as parts thereof, a tread portion, a pair of bead portions, and a pair of sidewall portions.

A center portion of the tread portion is also referred to as crown portion. An end portion of the tread portion is also referred to as shoulder portion.

[Findings Supporting the Present Invention]

A tread having a flat outer surface (hereinafter, referred to as flat tread) advantageously affects rolling resistance, but disadvantageously affects high-speed durability in a state provided with a camber angle (hereinafter, high-speed durability). A tread having a rounded outer surface (hereinafter, round tread) advantageously affects high-speed durability, but disadvantageously affects rolling resistance. Rolling resistance and high-speed durability conflict with each other, both of which are difficult to be achieved simultaneously through controlling a profile of an outer surface of a tread.

A tire in a running state repeats deformation and restoration. The radial position of the tread varies. Such movement of the tread affects rolling resistance and high-speed durability.

A tire includes a tread portion including a belt and a band. The belt and the band are provided radially inside the tread. The belt includes a belt cord composed of a steel cord and inclined from a circumferential direction. The band includes a band cord composed of an organic fiber cord and extending substantially in the circumferential direction. The belt and the band restrain the tread portion. This suppresses movement of the tread. The belt and the band can contribute to suppression of an increase in rolling resistance and a decrease in high-speed durability that are caused by movement of the tread.

There is a case where a tire fails to achieve an expected level of high-speed durability although the tire adopts a round tread advantageously affecting high-speed durability. The inventors of the present invention have investigated holding force of a belt and a band in order to find a cause thereof. The inventors of the present invention have eventually found that the end portion (hereinafter, referred to as shoulder portion) of the tread portion is likely to be lower in holding force than the center portion (hereinafter, referred to as crown portion) of the tread portion, which affects a degree of improvement in high-speed durability.

In view of the above, the inventors of the present invention have diligently examined a technique that can improve high-speed durability as well as can suppress an impact on rolling resistance, to achieve the invention to be described hereinafter.

[Summary of Embodiment of the Present Invention]

The present invention provides a tire including a pair of beads, a carcass extending between the pair of beads, a tread positioned radially outside the carcass and configured to come into contact with a road surface, a belt positioned radially inside the tread and radially outside the carcass, and a band positioned radially between the tread and the belt, in which a state where the tire is fitted on a normal rim and an internal pressure of the tire is adjusted to 92% of a normal internal pressure, and no load is applied to the tire is a standard state, the tread has an outer surface including a crown portion positioned at an axial center, a pair of middle portions positioned axially outside the crown portion, and a pair of shoulder portions positioned axially outside the middle portions, respectively, in a meridian cross-section of the tire in the standard state, the crown portion has a contour represented by an arc having a center on an equator plane, each of the middle portions has a contour represented by an arc tangent to the arc representing the contour of the crown portion, each of the shoulder portions has a contour represented by an arc tangent to the arc representing the contour of the middle portion, positions on an outer surface of the tire corresponding to axially outer ends of a ground-contact surface of the tire obtained by applying a vertical load of 75% of a normal load to the tire in the standard state and bringing the tire into contact with a flat surface are ground-contact reference ends, and an axial distance from first one of the ground-contact reference ends to second one of the ground-contact reference ends in the tire is an axial width Wa of the ground-contact surface, the arc representing the contour of the crown portion has a radius TR1 not less than 5 times and not greater than 7 times the axial width Wa, the belt includes a belt cord inclined from a circumferential direction, the belt cord is a steel cord, the band includes a band cord extending substantially in the circumferential direction, the band cord is an organic fiber cord, and at a position corresponding to 70% of a maximum width of the tire in the standard state, the band cord has a contraction ratio not less than 70% and not greater than 130% of a contraction ratio of the band cord on the equator plane of the tire.

The tire according to the present invention can achieve improvement in high-speed durability as well as suppression of an impact on rolling resistance. A mechanism exhibiting such effects is not clarified but is inferred as follows.

In the tire according to the present invention, the radius TR1 of the arc representing the contour of the crown portion is set to be not less than 5 times and not greater than 7 times a ground-contact width Wa of the ground-contact surface of the tire. Thus formed is a tread having a flat outer surface. As described above, the flat tread advantageously affects rolling resistance. The tread of the tire can contribute to suppression of an impact on rolling resistance.

Meanwhile, the flat tread disadvantageously affects high-speed durability as described above. However, taken into consideration in the tire is the contraction ratio of the band cord in the shoulder portion of the tread portion. Specifically, at a position corresponding to 70% of the maximum width of the tire in the standard state, the band cord has a contraction ratio set within a range not less than 70% and not greater than 130% of the contraction ratio of the band cord on the equator plane of the tire. In the tire, the contraction ratio of the band cord in the shoulder portion is set substantially equally to the contraction ratio of the band cord in the crown portion. This sufficiently restrains movement of the shoulder portion. The band can sufficiently contribute to restraining movement of the tread portion along with the belt including the belt cord composed of the steel cord.

The belt and the band according to the present invention exhibit significant effects on a tire expected to be used at a speed not less than 270 km/h, in other words, a tire having a speed symbol not less than W. The tire can be improved in high-speed durability.

Restraining movement of the tread portion can contribute also to reduction in rolling resistance. The tire can achieve improvement in high-speed durability as well as suppression of an impact on rolling resistance.

Preferably, in the ground-contact surface of the tire, a ratio of a center ground-contact length in a center of a ground-contact width of the ground-contact surface to a reference ground-contact length at a position corresponding to 80% of the ground-contact width of the ground-contact surface is a shape index F80, and the shape index F80 is not less than 1.10 and not greater than 1.40. This forms a ground-contact shape of the tire that can suppress an impact on high-speed durability as well as an impact on rolling resistance. The tire can maintain excellent high-speed durability as well as low rolling resistance. Since wear in the crown portion is suppressed, the tire can maintain excellent wear resistance.

Preferably, a ratio TR2/TR1 of a radius TR2 of the arc representing the contour of the middle portion to the radius TR1 of the arc representing the contour of the crown portion is not less than 0.35 and not greater than 0.40, and a ratio TR3/TR1 of a radius TR3 of the arc representing the contour of the shoulder portion to the radius TR1 of the arc representing the contour of the crown portion is not less than 0.09 and not greater than 0.13. The radius of the arc representing the contour of the shoulder portion is thus set to be smaller than a radius thereof in a conventional tire. In other words, the shoulder portion is more rounded than a conventional shoulder portion. The tire including the flat tread as a tread can suppress a local increase in ground-contact pressure at a ground-contact end, which may be generated under a condition where a large load is applied to the shoulder portion during limit running, high-speed running, or the like. The tire can suppress wear at the ground-contact end as well as a decrease in high-speed durability. The tire can achieve improvement in high-speed durability and suppression of an impact on wear resistance as well as an impact on rolling resistance.

Preferably, a ratio RW1/Wa of an axial distance RW1 from the equator plane to a boundary of the crown portion and the middle portion to the axial width Wa of the ground-contact surface is not less than 0.15 and not greater than 0.25, and a ratio RW3/Wa of an axial distance RW3 from a boundary of the middle portion and the shoulder portion to the ground-contact reference end to the axial width Wa is not less than 0.10 and not greater than 0.15. In the profile of the outer surface of the tread, the crown portion thus has a flat contour that can effectively contribute to reduction in rolling resistance, and the shoulder portion has a rounded contour that can effectively contribute to suppression of a local increase in ground-contact pressure at the ground-contact end. The tire can achieve improvement in high-speed durability and suppression of an impact on wear resistance as well as an impact on rolling resistance.

Preferably, in the meridian cross-section of the tire in the standard state, a ratio TR1/TRb of the radius TR1 of the arc representing the contour of the crown portion to a radius TRb of an arc having a center on the equator plane of the tire and passing through an equator and the ground-contact reference end of the tire is not less than 1.66 and not greater than 1.96. In the profile of the outer surface of the tread, the crown portion thus has a flat contour that can effectively contribute to reduction in rolling resistance, and the shoulder portion has a rounded contour that can effectively contribute to suppression of a local increase in ground-contact pressure at the ground-contact end. The tire can achieve improvement in high-speed durability and suppression of an impact on wear resistance as well as an impact on rolling resistance.

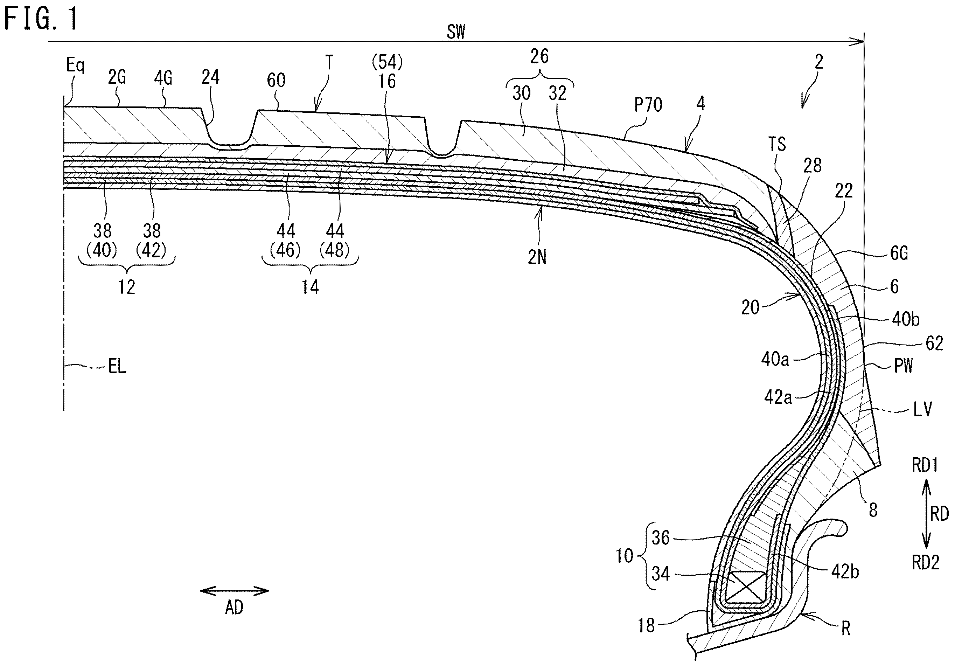

As described above, the tire according to the present invention can achieve improvement in high-speed durability as well as suppression of an impact on rolling resistance. The tire may also be able to achieve improvement in high-speed durability and suppression of an impact on wear resistance as well as an impact on rolling resistance. These will be described in detail hereinafter by exemplifying a tire 2 shown in FIG. 1.

[Details of Embodiment of the Present Invention]

FIG. 1 shows part of the tire 2 according to an embodiment of the present invention. The tire 2 is a pneumatic tire for a passenger vehicle. The tire 2 shown in FIG. 1 is in a state of being fitted on a rim R (normal rim).

FIG. 1 shows part of a section of the tire 2 along a plane including a rotation axis (not shown) of the tire 2. The section shown in FIG. 1 is also referred to as meridian cross-section.

FIG. 1 includes a double-pointed arrow AD indicating an axial direction of the tire 2. The axial direction of the tire 2 means a direction parallel to the rotation axis of the tire 2. FIG. 1 includes a double-pointed arrow RD indicating a radial direction of the tire 2. A direction perpendicular to the sheet of FIG. 1 is a circumferential direction of the tire 2. FIG. 1 also includes a dashed line EL extending radially and indicating an equator plane of the tire 2.

In the axial direction, a side away from the equator plane corresponds to an axially outside of the tire 2, whereas a side close to the equator plane corresponds to an axially inside of the tire 2. A direction indicated by an arrow RD1 corresponds to a radially outward direction of the tire 2, whereas a direction indicated by an arrow RD2 corresponds to a radially inward direction of the tire 2.

FIG. 1 includes a position Eq indicating a point of intersection between an outer surface 2G (specifically, tread surface to be described later) of the tire 2 and the equator plane. The point of intersection Eq corresponds to the equator of the tire 2.

In a case where a groove is positioned on the equator plane, the equator Eq is specified based on a virtual outer surface obtained assuming that the groove is not provided. The equator Eq corresponds to a radially outer end of the tire 2.

FIG. 1 includes a position PW indicating an axially outer end (hereinafter, outer end PW) of the tire 2. In a case where the outer surface 2G is provided with decoration such as a pattern or a character, the outer end PW is specified based on a virtual outer surface (a two-dot chain line LV in FIG. 1) obtained assuming that the outer surface is provided with no decoration.

FIG. 1 includes a double-pointed arrow SW indicating a length as the maximum width of the tire 2. The maximum width SW of the tire 2 indicates an axial distance from a first outer end PW to a second outer end PW (not shown). The outer end PW is also referred to as maximum width position. The maximum width SW obtained in the normal state corresponds to a section width (see JATMA and the like) of the tire 2.

FIG. 1 includes a position P70 as a position corresponding to 70% of the maximum width SW of the tire 2 on the outer surface 2G of the tire 2. The position P70 is specified in the tire 2 in the standard state. In the standard state of the tire 2, a ratio of an axial distance from the equator plane to the position P70 to an axial distance from the equator plane to the maximum width position PW is 70%.

The tire 2 includes a tread 4, a pair of sidewalls 6, a pair of clinches 8, a pair of beads 10, a carcass 12, a belt 14, a band 16, a pair of chafers 18, an inner liner 20, and a pair of insulations 22.

The tread 4 is positioned radially outside the carcass 12. The tread 4 is formed from a crosslinked rubber. The tread 4 comes into contact with a road surface.

The tread 4 includes a groove 24 carved therein. The groove 24 thus provided forms a tread pattern.

FIG. 1 includes a position TS indicating a boundary of the tread 4 and the sidewall 6 to be described later on the outer surface 2G of the tire 2. The boundary TS corresponds also to an end of an outer surface 4G of the tread 4.

The tread 4 includes a tread body 26 and a pair of wings 28. The tread body 26 principally comes into contact with a road surface. The wings 28 are each positioned between the tread body 26 and corresponding one of the sidewalls 6. The tread body 26 and the sidewalls 6 are joined via the wings 28, respectively. The wings 28 are each formed from a crosslinked rubber obtained from a rubber material having adhesiveness.

The tread body 26 includes a cap layer 30 positioned radially outermost, and a base layer 32 positioned radially innermost. The tread body 26 of the tire 2 is formed by two layers, namely, the cap layer 30 and the base layer 32. The cap layer 30 is formed from a crosslinked rubber having wear resistance and grip performance in consideration of contact with a road surface. The base layer 32 is positioned radially inside the cap layer 30. The base layer 32 is covered with the cap layer 30. The base layer 32 is formed from a low-heat-generating crosslinked rubber.

The sidewalls 6 are provided continuously to the tread 4. The sidewalls 6 are positioned axially outside the carcass 12. The sidewalls 6 are each formed from a crosslinked rubber having cutting resistance.

The clinches 8 are positioned radially inside the sidewalls 6, respectively. The clinches 8 are in contact with the rim R. The clinches 8 are each formed from a crosslinked rubber having wear resistance.

The beads 10 are positioned radially inside the sidewalls 6, respectively. The beads 10 are positioned axially inside the clinches 8, respectively.

The beads 10 each include a core 34 and an apex 36. The core 34 extends circumferentially. Though not shown, the core 34 includes a steel wire. The apex 36 is positioned radially outside the core 34. The apex 36 is formed from a crosslinked rubber having high stiffness. The apex 36 is tapered radially outward.

The carcass 12 is positioned inside the tread 4, the pair of sidewalls 6, and the pair of clinches 8. The carcass 12 extends between the pair of beads 10.

The carcass 12 includes at least one carcass ply 38. The carcass 12 of the tire 2 is composed of two carcass plies 38. Of the two carcass plies 38, the one located at a radially inner position inside the tread 4 is the first carcass ply 40, and the one located at a radially outer position is the second carcass ply 42.

The first carcass ply 40 is turned up at the beads 10 outward from axially inside. The first carcass ply 40 includes a first ply body 40a and a pair of first turned-up portions 40b. The first ply body 40a extends between the pair of beads 10. The first turned-up portions 40b are provided continuously to the first ply body 40a and are turned up at the beads 10, respectively. The first turned-up portions 40b have ends positioned radially outside the axially outer ends PW of the tire 2.

The second carcass ply 42 is turned up at the beads 10 outward from axially inside. The second carcass ply 42 includes a second ply body 42a and a pair of second turned-up portions 42b. The second ply body 42a extends between the pair of beads 10. The second turned-up portions 42b are provided continuously to the second ply body 42a and are turned up at the beads 10, respectively. The second turned-up portions 42b have ends positioned radially inside an outer end of the apex 36. The ends of the second turned-up portions 42b are covered with the first turned-up portions 40b.

The second ply body 42a corresponds to a ply body positioned outermost in at least one ply body included in the carcass 12.

Though not shown, the carcass plies 38 forming the carcass 12 each include a large number of carcass cords arranged parallelly. The carcass cords cross the equator plane. The carcass 12 of the tire 2 has a radial structure. The carcass cords are composed of organic fiber (hereinafter, organic fiber cords). Examples of the organic fiber include nylon fiber, rayon fiber, polyester fiber, and aramid fiber.

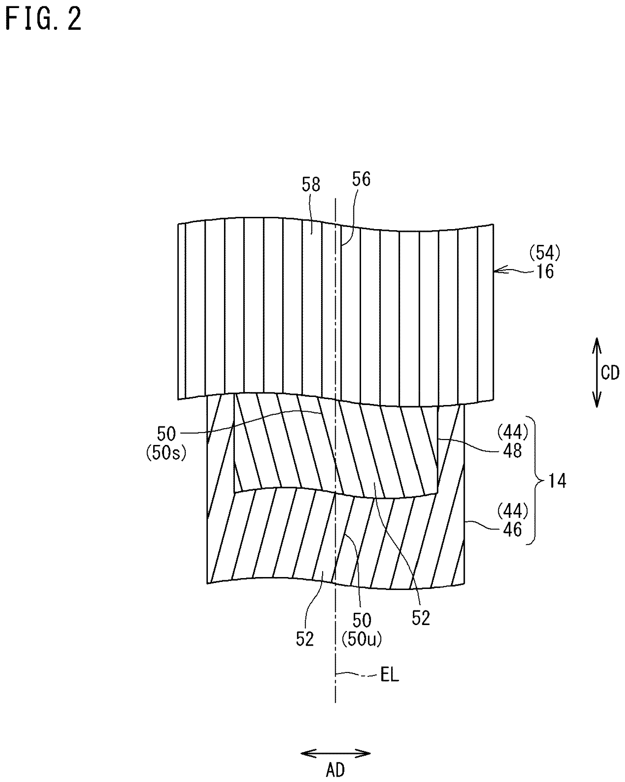

FIG. 2 is an explanatory view of configurations of the belt 14 and the band 16. FIG. 2 also includes a double-pointed arrow CD indicating the circumferential direction of the tire 2. A front side of the sheet corresponds to a radially outside, whereas a rear side of the sheet corresponds to a radially inside. The configurations of the belt 14 and the band 16 will be described with reference to FIG. 1 and FIG. 2.

The belt 14 is positioned radially inside the tread 4. The belt 14 is positioned radially outside the carcass 12. The belt 14 of the tire 2 is positioned radially inside the tread 4 and is stacked on the carcass 12.

The belt 14 includes a plurality of belt plies 44 arranged radially. The plurality of belt plies 44 includes an inner belt ply 46 positioned innermost, and an outer belt ply 48 positioned outermost. The belt 14 of the tire 2 is composed of two belt plies 44, specifically, the inner belt ply 46 and the outer belt ply 48.

The inner belt ply 46 is positioned radially inside the tread 4 and is stacked on the carcass 12. The outer belt ply 48 is stacked on the inner belt ply 46.

The outer belt ply 48 has an end positioned axially inside an end of the inner belt ply 46. The outer belt ply 48 is narrower than the inner belt ply 46. The end of the inner belt ply 46 corresponds to an end of the belt 14.

The belt plies 44 forming the belt 14 include a large number of belt cords 50 arranged parallelly. The belt cords 50 are indicated by solid lines in FIG. 2 for convenient description, but are actually each covered with a topping rubber 52.

The belt cords 50 are steel cords. The belt cords 50 are not particularly limited, and may be composed of steel cords typically used for belt cords of a tire.

The belt cords 50 included in the belt 14 are inclined from the circumferential direction. As shown in FIG. 2, the belt cords 50 (hereinafter, referred to as outer belt cords 50s) included in the outer belt ply 48 and the belt cords 50 (hereinafter, referred to as inner belt cords 50u) included in the inner belt ply 46 are inclined in directions opposite to each other.

The belt 14 includes the belt cords 50 composed of steel cords and inclined from the circumferential direction.

The band 16 is positioned radially inside the tread 4 and is stacked on the belt 14. The band 16 is positioned radially between the tread 4 and the belt 14. The band 16 has an end positioned axially outside the end of the belt 14. The band 16 covers the belt 14.

The band 16 of the tire 2 includes a full band 54. The band 16 may include a pair of edge bands disposed to be axially separate from each other to interpose the equator plane and cover end portions of the belt 14. The band 16 may include the full band 54 and the pair of edge bands. Though not shown, the pair of edge bands are disposed to be axially separate from each other to interpose the equator plane and cover end portions of the full band 54 from radially outside.

The full band 54 forming the band 16 includes a spirally wound band cord 56. The band cord 56 is indicated by solid lines in FIG. 2 for convenient description, but is actually covered with a topping rubber 58.

The band cord 56 extends substantially circumferentially in the band 16. Specifically, the band cord 56 forms an angle to the circumferential direction not greater than 5 degrees. The band 16 has a jointless structure. The band cord 56 is an organic fiber cord. Examples of the organic fiber include nylon fiber, rayon fiber, polyester fiber, and aramid fiber. The band cord 56 is not particularly limited, and may be composed of an organic fiber cord typically used for a band cord of a tire.

The band 16 includes the band cord 56 composed of an organic fiber cord and extending substantially in the circumferential direction.

The chafers 18 are positioned radially inside the beads 10, respectively. The chafers 18 are in contact with the rim R. The chafers 18 of the tire 2 are each formed from cloth and a rubber impregnated in the cloth.

The inner liner 20 is positioned inside the carcass 12. The inner liner 20 forms an inner surface 2N of the tire 2. The inner liner 20 is formed from a crosslinked rubber having excellent air impermeability. The inner liner 20 keeps the internal pressure of the tire 2.

The insulations 22 are positioned axially inside the sidewalls 6, respectively. Specifically, each of the insulations 22 is stacked on the second ply body 42a at a position axially inside the sidewall 6. In other words, the insulations 22 of the tire 2 are positioned axially inside the sidewalls 6, respectively, and are each stacked on the ply body positioned outermost in the at least one ply body included in the carcass 12.

Each of the insulations 22 has a first end positioned axially inside the end of the belt 14. The insulation 22 has a second end positioned radially inside the outer end of the apex 36.

The insulation 22 is located between the second ply body 42a and the first turned-up portion 40b in the radially inner region of the end of the first turned-up portion 40b, and between the second ply body 42a and the apex 36 in the radially inner region of the outer end of the apex 36. The insulations 22 are formed from a crosslinked rubber. The insulations 22 are harder than the sidewalls 6.

The insulations 22 are not essential elements of the tire 2 according to the present invention. The tire 2 may include no insulations 22.

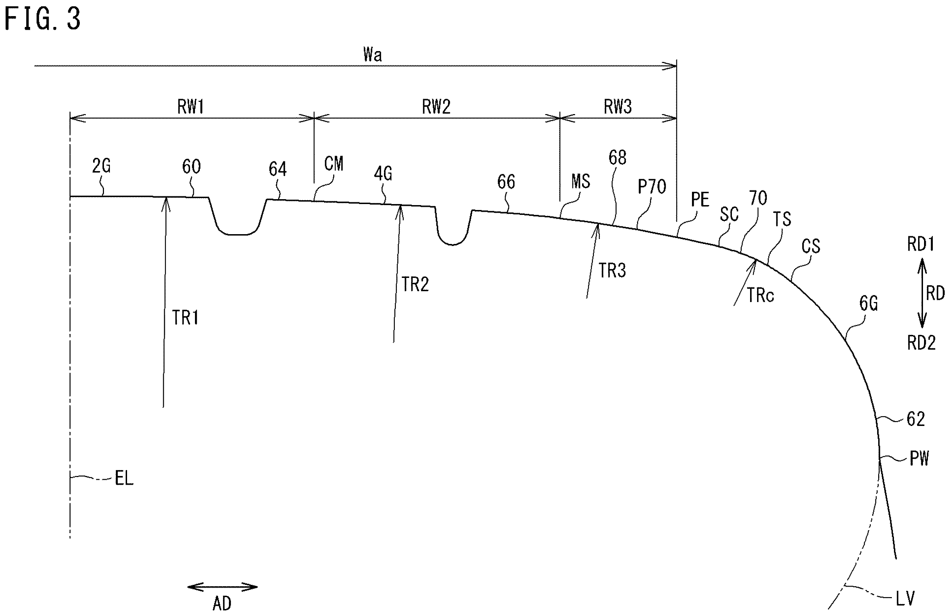

FIG. 3 shows part of a contour line of the outer surface 2G of the tire 2 in the meridian cross-section of the tire 2. The contour line of the outer surface 2G is indicated by a virtual outer surface obtained assuming that the outer surface is provided with no decoration such as a groove, a pattern, or a character. Though not detailed, the contour line of the outer surface 2G according to the present invention is obtained by measuring an outer surface shape of the tire 2 with use of a displacement sensor or the like in a state where the tire 2 is fitted on the rim R, the tire 2 is filled with air, and the internal pressure of the tire 2 is adjusted.

The contour line of the outer surface 2G shown in FIG. 3 indicates the outer surface shape of the tire 2 in the standard state. The contour of the outer surface 2G indicated by the contour line is shaped symmetrically with respect to the equator plane.

The outer surface 2G of the tire 2 includes a tread surface 60, and a pair of side surfaces 62 provided continuously to the tread surface 60. The tread surface 60 is divided into seven parts arranged axially. The tread surface 60 includes, as the seven parts, a crown portion 64, a pair of middle portions 66, a pair of shoulder portions 68, and a pair of corner portions 70.

The crown portion 64 is positioned at an axial center. The equator plane crosses the crown portion 64. The pair of middle portions 66 are positioned axially outside the crown portion 64. FIG. 3 includes a position CM indicating a boundary of the crown portion 64 and the middle portion 66. The pair of shoulder portions 68 are positioned axially outside the middle portions 66, respectively. FIG. 3 includes a position MS indicating a boundary of the middle portion 66 and the shoulder portion 68. The pair of corner portions 70 are positioned axially outside the shoulder portions 68, respectively. FIG. 3 includes a position SC indicating a boundary of the shoulder portion 68 and the corner portion 70.

The crown portion 64 is the part that is positioned at the axial center. The corner portions 70 are parts that are positioned axially outermost. The middle portions 66 and the shoulder portions 68 are parts that are positioned between the crown portion 64 and the corner portion 70.

As described above, the corner portion 70 is the part that is positioned axially outermost. The corner portion 70 is connected to the side surface 62. The corner portion 70 is positioned between the shoulder portion 68 and the side surface 62. FIG. 3 includes a position CS indicating a boundary of the corner portion 70 and the side surface 62. The boundary CS corresponds also to an end of the tread surface 60.

As shown in FIG. 3, the corner portion 70 includes the boundary TS of the outer surface 4G of the tread 4 and an outer surface 6G of the sidewall 6. The tread surface 60 of the tire 2 includes the outer surface 4G of the tread 4. The outer surface 2G of the tire 2 may be formed such that the boundary TS of the outer surface 4G of the tread 4 and the outer surface 6G of the sidewall 6 matches the end CS of the tread surface 60. The tread surface 60 includes the corner portion 70 connecting the shoulder portion 68 and the side surface 62.

In the meridian cross-section of the tire 2, the crown portion 64, the middle portions 66, the shoulder portions 68, and the corner portions 70 each have a contour represented by an arc.

The contour of the crown portion 64 is represented by the arc having a center on the equator plane. FIG. 3 includes an arrow TR1 indicating a radius of the arc representing the contour of the crown portion 64.

The contour of the middle portion 66 is represented by the arc tangent to the arc representing the contour of the crown portion 64. FIG. 3 includes an arrow TR2 indicating a radius of the arc representing the contour of the middle portion 66. The arc representing the contour of the middle portion 66 is tangent to the arc representing the contour of the crown portion 64 at the boundary CM. The boundary CM is a tangent point between the arc representing the contour of the middle portion 66 and the arc representing the contour of the crown portion 64.

The contour of the shoulder portion 68 is represented by the arc tangent to the arc representing the contour of the middle portion 66. FIG. 3 includes an arrow TR3 indicating a radius of the arc representing the contour of the shoulder portion 68. The arc representing the contour of the shoulder portion 68 is tangent to the arc representing the contour of the middle portion 66 at the boundary MS. The boundary MS is a tangent point between the arc representing the contour of the shoulder portion 68 and the arc representing the contour of the middle portion 66.

The contour of the corner portion 70 is represented by the arc tangent to the arc representing the contour of the shoulder portion 68. FIG. 3 includes an arrow TRc indicating a radius of the arc representing the contour of the corner portion 70. The arc representing the contour of the corner portion 70 is tangent to the arc representing the contour of the shoulder portion 68 at the boundary SC. The boundary SC is a tangent point of the arc representing the contour of the corner portion 70 and the arc representing the contour of the shoulder portion 68. The arc representing the contour of the corner portion 70 is tangent to a contour line of the side surface 62 at the boundary CS. The boundary CS is a tangent point of the arc representing the contour of the corner portion 70 and the contour line of the side surface 62.

On a contour line of the outer surface 4G of the tread 4, the arc representing the contour of the crown portion 64 (hereinafter, referred to as the crown arc) is represented by an arc having a maximum length overlapped with the contour line from the equator Eq. The arc representing the contour of the middle portion 66 (hereinafter, referred to as the middle arc) is represented by an arc tangent to the crown arc at the end of the crown arc and having a maximum length overlapped with the contour line from the end of the crown arc. The end of the arc representing the contour of the crown portion 64 corresponds to a first end of the arc representing the contour of the middle portion 66 and the boundary CM of the crown portion 64 and the middle portion 66. The arc representing the contour of the shoulder portion 68 (hereinafter, referred to as the shoulder arc) is represented by an arc tangent to the middle arc at a second end of the middle arc and having a maximum length overlapped with the contour line from the second end of the middle arc. The second end of the arc representing the contour of the middle portion 66 corresponds to a first end of the arc representing the contour of the shoulder portion 68 and the boundary MS of the middle portion 66 and the shoulder portion 68. The arc representing the contour of the corner portion 70 (hereinafter, referred to as the corner arc) is represented by an arc tangent to the shoulder arc at a second end of the shoulder arc and having a maximum length overlapped with the contour line from the second end of the shoulder arc. The second end of the arc representing the contour of the shoulder portion 68 corresponds to a first end of the arc representing the contour of the corner portion 70 and the boundary SC of the shoulder portion 68 and the corner portion 70. A second end of the arc representing the contour of the corner portion 70 corresponds to the end CS of the tread surface 60 and the boundary CS of the tread surface 60 and the side surface 62.

In the tire 2, the radius TR1 of the arc representing the contour of the crown portion 64 is larger than the radius TR2 of the arc representing the contour of the middle portion 66. The radius TR2 of the arc representing the contour of the middle portion 66 is larger than the radius TR3 of the arc representing the contour of the shoulder portion 68. The radius TR3 of the arc representing the contour of the shoulder portion 68 is larger than the radius TRc of the arc representing the contour of the corner portion 70.

In the seven parts forming the tread surface 60, the arc representing the contour of the crown portion 64 positioned at the axial center has the largest radius TR1, and the arc representing the contour of the corner portion 70 positioned axially outermost has the smallest radius TRc. The radius TRc is smaller than the radius TR1. Specifically, a ratio TRc/TR1 of the radius TRc to the radius TR1 is not less than 0.020 and not greater than 0.040.

In two parts axially adjacent to each other, the arc representing the contour of a first part positioned axially outside is smaller in radius than the arc representing the contour of a second part positioned axially inside the first part.

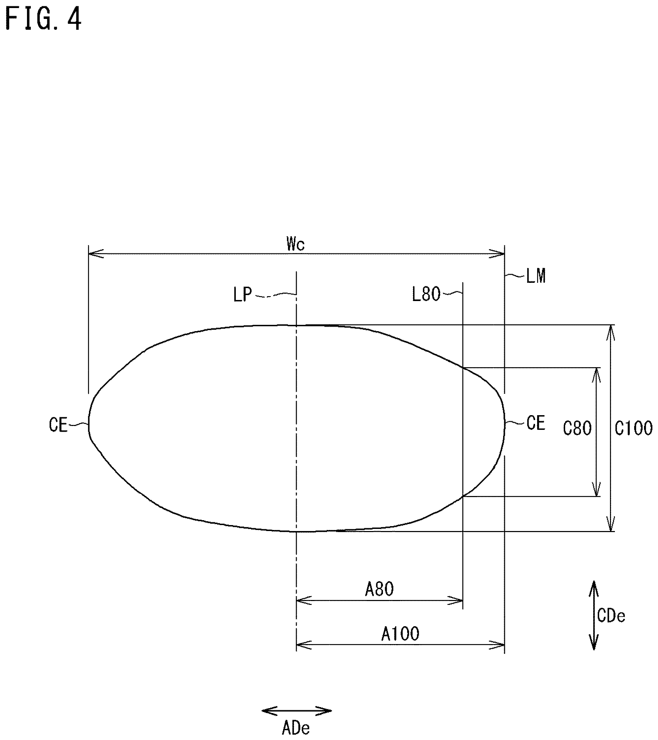

FIG. 4 schematically shows an exemplary ground-contact surface of the tire 2. FIG. 4 includes a double-pointed arrow ADe corresponding to the axial direction of the tire 2. FIG. 4 also includes a double-pointed arrow CDe corresponding to the circumferential direction of the tire 2. Hereinafter, dimensions of the ground-contact surface will be represented by dimensions of the tire 2 for convenient description.

The ground-contact surface is obtained by applying a predetermined load to the tire 2 in a state where the tire 2 is fitted on the rim R, the tire 2 is filled with air, and the internal pressure of the tire 2 is adjusted, and bringing the tire 2 into contact with a flat surface with use of a tire ground-contact surface shape measurement device (not shown). An image of the ground-contact surface shown in FIG. 4 is obtained by tracing a contour of the ground-contact surface. The shape of the ground-contact surface is captured in accordance with the image. In a case where the ground-contact surface includes a portion divided by a groove, the portion is connected by a straight line prior to tracing the contour of the ground-contact surface.

The tire 2 is disposed to have the axial direction in parallel with a road surface in order to obtain the ground-contact surface. The load mentioned above is applied to the tire 2 in a direction perpendicular to the road surface. In other words, a vertical load is applied to the tire 2 having a camber angle set to 0 degrees.

FIG. 4 includes a position CE indicating an axially outer end (also referred to as ground-contact end) of the ground-contact surface. In the present invention, the axially outer end (hereinafter, referred to as ground-contact end CE) is specified of the ground-contact surface positioned between the tire 2 and a flat surface and obtained by applying a vertical load corresponding to 75% of a normal load to the tire 2 in the standard state and bringing the tire 2 into contact with the flat surface. A position corresponding to the ground-contact end CE on the outer surface 2G of the tire 2 corresponds to a ground-contact reference end. FIG. 3 includes a position PE corresponding to the ground-contact reference end.

FIG. 4 includes a double-pointed arrow Wc indicating a length as a ground-contact width of the ground-contact surface. The ground-contact width Wc corresponds to an axial distance from a first ground-contact end CE to a second ground-contact end CE. The ground-contact width Wc matches a length from a first ground-contact reference end PE to a second ground-contact reference end PE measured along the tread surface 60 in the meridian cross-section shown in FIG. 3.

FIG. 3 includes a double-pointed arrow Wa indicating an axial width of the ground-contact surface of the tire 2. The axial width Wa corresponds to an axial distance from the first ground-contact reference end PE to the second ground-contact reference end PE in the tire 2 in the standard state. The tread surface 60 is curved to bulge outward. The axial width Wa of the ground-contact surface is smaller than the ground-contact width Wc.

As shown in FIG. 3, the ground-contact reference end PE is positioned between the position P70 and the boundary SC (in other words, outer end SC of the shoulder portion 68) of the shoulder portion 68 and the corner portion 70. The position P70 is located between the ground-contact reference end PE and the boundary MS (in other words, inner end MS of the shoulder portion 68) of the middle portion 66 and the shoulder portion 68.

FIG. 3 includes a double-pointed arrow RW1 indicating an axial distance from the equator plane to the boundary CM of the crown portion 64 and the middle portion 66. FIG. 3 further includes a double-pointed arrow RW2 indicating an axial distance from the boundary CM of the crown portion 64 and the middle portion 66 to the boundary MS of the middle portion 66 and the shoulder portion 68. FIG. 3 also includes a double-pointed arrow RW3 indicating an axial distance from the boundary MS of the middle portion 66 and the shoulder portion 68 to the ground-contact reference end PE.

Though not detailed, the tire 2 shown in FIG. 1 is manufactured in accordance with a known method. Though not shown, constituent elements such as the tread 4 and the sidewalls 6 are combined to prepare the tire 2 in an unvulcanized state, that is, a green tire. The green tire is pressurized and heated in a mold to obtain the tire 2. The outer surface 2G of the tire 2 is shaped by the mold.

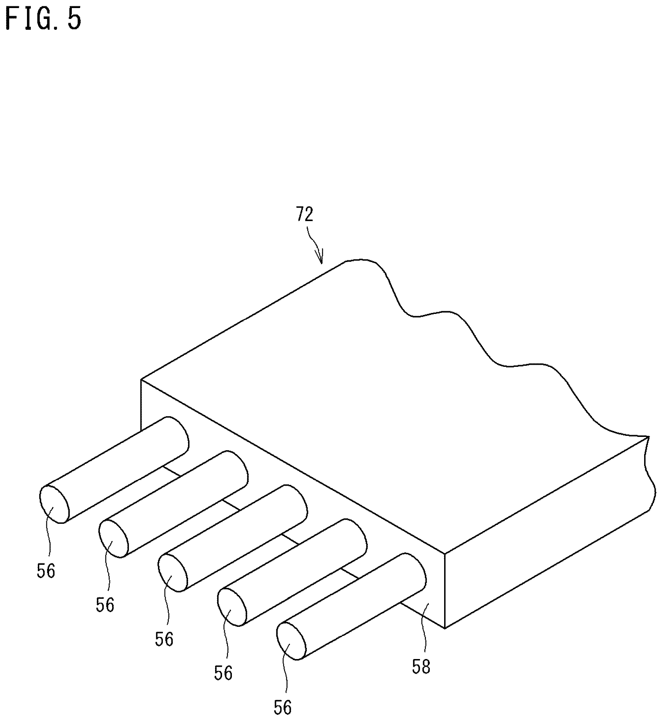

The band 16 is formed using a band strip 72 as shown in FIG. 5. The band strip 72 is in the form of a strip. The band strip 72 includes a single or a plurality of band cords 56. The band strip 72 shown in FIG. 5 includes five band cords 56. The band cords 56 are arranged in a width direction of the band strip 72 and extend in a length direction of the band strip 72. The band strip 72 is a cord array including the plurality of band cords 56 arrayed.

The band 16 is obtained by spirally winding the band strip 72. The band 16 thus includes the spirally wound band cord 56 as described above.

The band 16 is formed by spirally winding the band cord 56 to which a predetermined load is being applied. Tension generated by applying the load to the band cord 56 is applied to the tire 2 as holding force to be described later.

In the tire 2, the radius TR1 of the arc representing the contour of the crown portion 64 is not less than 5 times the axial width Wa of the ground-contact surface of the tire 2. Thus formed is the tread 4 having the outer surface 4G in a flat shape. Ground-contact pressure is reduced in the crown portion 64, and mechanical fatigue is reduced in the tread 4. The tread 4 advantageously affects rolling resistance. The tread 4 can contribute to suppression of an impact on rolling resistance. The radius TR1 is preferably not less than 5.5 times the axial width Wa from this viewpoint.

The radius TR1 is not greater than 7 times the axial width Wa. Accordingly, radial inward deformation of the crown portion 64 is prevented, and excessive increase in ground-contact pressure at the shoulder portion 68 is suppressed. The tire 2 can maintain excellent wear resistance. The radius TR1 is preferably not greater than 6.5 times the axial width Wa from this viewpoint.

As described above, the flat tread disadvantageously affects high-speed durability. However, taken into consideration in the tire 2 is a contraction ratio of the band cord 56 in the shoulder portion of a tread portion T. Specifically, at the position P70 corresponding to 70% of the maximum width SW of the tire 2 in the standard state, the band cord 56 has a contraction ratio SRs not less than 70% and not greater than 130% of a contraction ratio SRc of the band cord 56 on the equator plane of the tire 2. In the tire 2, the contraction ratio of the band cord 56 in the shoulder portion is set substantially equally to the contraction ratio of the band cord 56 in the crown portion. This sufficiently restrains movement of the shoulder portion. The band 16 can sufficiently contribute to restraining movement of the tread portion T along with the belt 14 including the belt cords 50 composed of steel cords.

The belt 14 and the band 16 of the tire 2 exhibit significant effects on a tire expected to be used at a speed not less than 270 km/h, in other words, a tire having a speed symbol not less than W. The tire 2 can be improved in high-speed durability.

Restraining movement of the tread portion T can contribute also to reduction in rolling resistance. The tire 2 can achieve improvement in high-speed durability as well as suppression of an impact on rolling resistance.

As described above, the band cord 56 at the position P70 has the contraction ratio SRs not less than 70% and not greater than 130% of the contraction ratio SRc of the band cord 56 on the equator plane of the tire 2. In other words, a ratio SRs/SRc of the contraction ratio SRs of the band cord 56 to the contraction ratio SRc of the band cord 56 is not less than 70% and not greater than 130%. From the viewpoint that the band 16 can effectively contribute to restraining the tread portion T, the ratio SRs/SRc is preferably not less than 80% and not greater than 120%, more preferably not less than 90% and not greater than 110%, and further preferably not less than 95% and not greater than 105%.

In the present invention, the contraction ratio SRc of the band cord 56 on the equator plane is represented by a contraction ratio of the band cord 56 included in a zone having the equator plane as a center and an axial width of 5% of the maximum width SW. The contraction ratio SRs of the band cord 56 at the position P70 is represented by a contraction ratio of the band cord 56 included in a zone having the position P70 as a center and an axial width of 5% of the maximum width SW.

FIG. 4 includes a dashed line LP extending circumferentially and corresponding to a center line of the ground-contact width Wc of the ground-contact surface. The center line LP of the tire 2 corresponds to the equator plane of the tire 2. FIG. 4 includes a double-pointed arrow C 100 indicating a length of a line of intersection between a plane including the center line LP and the ground-contact surface. The length C100 of the line of intersection corresponds to a center ground-contact length in the center of the ground-contact width Wc of the ground-contact surface.

FIG. 4 includes a solid line LM as a straight line passing through the ground-contact end CE and being parallel to the center line LP. FIG. 4 includes a solid line L80 as a straight line positioned between the straight line LM and the center line LP and parallel to the straight line LM and the center line LP. FIG. 4 includes a double-pointed arrow A100 indicating an axial distance from the center line LP to the straight line LM. The distance A100 corresponds to a half of the ground-contact width Wc of the ground-contact surface. FIG. 4 includes a double-pointed arrow A80 indicating an axial distance from the center line LP to the straight line L80. A ratio of the distance A80 to the distance A100 is 80% in FIG. 4. The straight line L80 thus indicates a position corresponding to 80% of the ground-contact width Wc. FIG. 4 includes a double-pointed arrow C80 indicating a length of a line of intersection between a plane including the straight line L80 and the ground-contact surface. The length C80 of the line of intersection in the tire 2 corresponds to a reference ground-contact length at a position corresponding to 80% of the ground-contact width Wc of the ground-contact surface.

In the ground-contact surface of the tire 2 in the standard state, a ratio C100/C80 of the center ground-contact length C100 in the center of the ground-contact width Wc of the ground-contact surface to the reference ground-contact length C80 at the position corresponding to 80% of the ground-contact width Wc of the ground-contact surface is a shape index F80.

The shape index F80 of the tire 2 is preferably not less than 1.10 and not greater than 1.40. This forms a ground-contact shape of the tire 2 which can suppress an impact on high-speed durability as well as an impact on rolling resistance. The tire 2 can maintain excellent high-speed durability as well as low rolling resistance. Since wear in the crown portion is suppressed, the tire 2 can also maintain excellent wear resistance. The crown portion has suppressed abrasion, and the tire 2 can thus also maintain excellent wear resistance. From this viewpoint, the shape index F80 is more preferably not less than 1.15 and not greater than 1.35, and further preferably not less than 1.20 and not greater than 1.30. The shape index F80 is particularly preferably 1.25.

A ratio TR2/TR1 of the radius TR2 of the arc representing the contour of the middle portion 66 to the radius TR1 of the arc representing the contour of the crown portion 64 is preferably not less than 0.35 and not greater than 0.40. Thus formed is the tread 4 having the outer surface 4G in a flat shape. Ground-contact pressure is reduced in the crown portion 64, and mechanical fatigue is reduced in the tread 4. The tread 4 advantageously affects rolling resistance. The tread 4 can contribute to suppression of an impact on rolling resistance. The ratio TR2/TR1 is more preferably not less than 0.37 and not greater than 0.39 from this viewpoint.

A ratio TR3/TR1 of the radius TR3 of the arc representing the contour of the shoulder portion 68 to the radius TR1 of the arc representing the contour of the crown portion 64 is preferably not less than 0.09 and not greater than 0.13. The shoulder portion 68 is thus formed to be rounded. This suppresses a local increase of the ground-contact pressure at the ground-contact end. The tire 2 can suppress wear at the ground-contact end as well as a decrease in high-speed durability. The tire 2 can achieve improvement in high-speed durability as well as suppression of an impact on wear resistance as well as an impact on rolling resistance. The ratio TR3/TR1 is more preferably not less than 0.10 and not greater than 0.12 from this viewpoint.

When the flat tread is adopted as a tread, the shoulder portion tends to have a local increase in ground-contact pressure under a condition where a large load is applied to the shoulder portion during limit running, high-speed running, or the like. In this case, the shoulder portion may have abnormal heat generation that may cause wear at the ground-contact end or a decrease in high-speed durability.

However, the ratio TR2/TR1 is set to be not less than 0.35 and not greater than 0.40 in the tire 2 as described above, so as to form the tread 4 that has the flat outer surface 4G and that can contribute to suppression of an impact on rolling resistance. When the ratio TR3/TR1 is set to be not less than 0.09 and not greater than 0.13, the shoulder portion 68 is formed to be rounded and can contribute to suppression of wear at the ground-contact end and a decrease in high-speed durability. Particularly when the ratio TR2/TR1 is set to be not less than 0.35 and not greater than 0.40 and the ratio TR3/TR1 is set to be not less than 0.09 and not greater than 0.13, the arc representing the contour of the shoulder portion 68 in the tire 2 has the radius TR3 that can be set smaller than that of a conventional tire. In other words, the shoulder portion 68 is more rounded than a conventional shoulder portion. This suppresses a local increase of the ground-contact pressure at the ground-contact end. The tire 2 can suppress wear at the ground-contact end as well as a decrease in high-speed durability. The tire 2 can achieve improvement in high-speed durability as well as suppression of an impact on wear resistance as well as an impact on rolling resistance. From this viewpoint, preferably, the ratio TR2/TR1 is not less than 0.35 and not greater than 0.40 and the ratio TR3/TR1 is not less than 0.09 and not greater than 0.13, and more preferably, the ratio TR2/TR1 is not less than 0.37 and not greater than 0.39 and the ratio TR3/TR1 is not less than 0.10 and not greater than 0.12.

A ratio RW1/Wa of the axial distance RW1 from the equator plane to the boundary CM of the crown portion 64 and the middle portion 66 to the axial width Wa of the ground-contact surface is preferably not less than 0.15 and not greater than 0.25. In the profile of the outer surface of the tread 4, that is, the tread surface 60, the crown portion 64 thus has a flat contour that can effectively contribute to reduction in rolling resistance. The ratio RW1/Wa is more preferably not less than 0.18 and not greater than 0.22 from this viewpoint.

A ratio RW3/Wa of the axial distance RW3 from the boundary MS of the middle portion 66 and the shoulder portion 68 to the ground-contact reference end PE to the axial width Wa is preferably not less than 0.10 and not greater than 0.15. In the profile of the tread surface 60, the shoulder portion 68 has a rounded contour that can effectively contribute to suppression of a local increase in ground-contact pressure at the ground-contact end. The ratio RW3/Wa is more preferably not less than 0.10 and not greater than 0.13 from this viewpoint.

Preferably in the tire 2, the ratio RW1/Wa is not less than 0.15 and not greater than 0.25 and the ratio RW3/Wa is not less than 0.10 and not greater than 0.15. In the profile of the tread surface 60, the crown portion 64 thus has a flat contour that can effectively contribute to reduction in rolling resistance, and the shoulder portion 68 has a rounded contour that can effectively contribute to suppression of a local increase in ground-contact pressure at the ground-contact end. The tire 2 can achieve improvement in high-speed durability as well as suppression of an impact on wear resistance as well as an impact on rolling resistance. More preferably, the ratio RW1/Wa is not less than 0.18 and not greater than 0.22 and the ratio RW3/Wa is not less than 0.10 and not greater than 0.13 from this viewpoint.

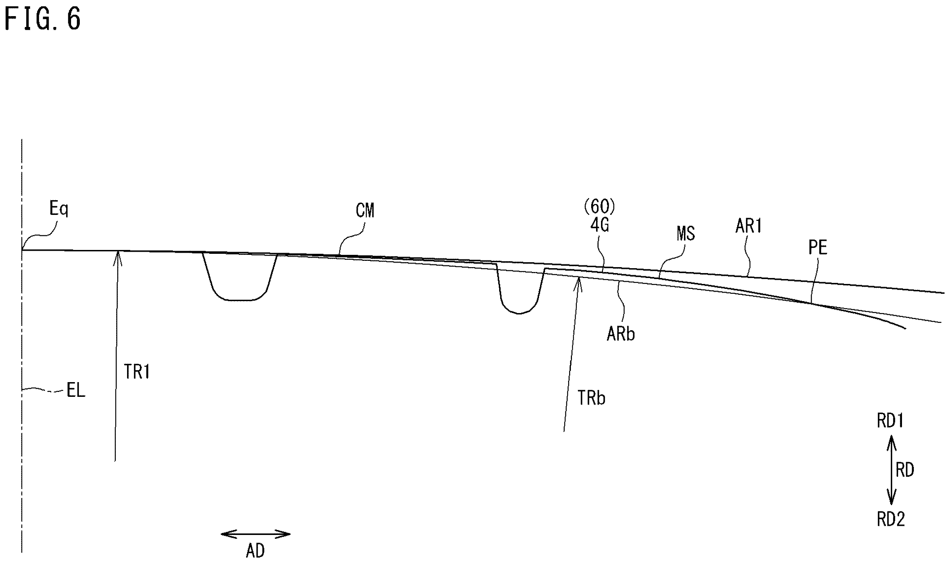

FIG. 6 shows part of the contour line in FIG. 3. FIG. 6 includes a solid line AR1 as an extension line of the arc representing the contour of the crown portion 64. The extension line AR1 is an arc having a center on the equator plane, passing through the equator Eq, and having the radius TR1. FIG. 6 includes a solid line ARb indicating an arc having a center on the equator plane and passing through the equator Eq and the ground-contact reference end PE. FIG. 6 includes an arrow TRb indicating a radius of the arc represented by the solid line ARb.

In the meridian cross-section of the tire 2 in the standard state, a ratio TR1/TRb of the radius TR1 of the arc representing the contour of the crown portion 64 to the radius TRb of the arc having the center on the equator plane of the tire 2 and passing through the equator Eq and the ground-contact reference end PE of the tire 2 is preferably not less than 1.66 and not greater than 1.96. In the profile of the tread surface 60, the crown portion 64 thus has a flat contour that can effectively contribute to reduction in rolling resistance, and the shoulder portion 68 has a rounded contour that can effectively contribute to suppression of a local increase in ground-contact pressure at the ground-contact end. The tire 2 can achieve improvement in high-speed durability as well as suppression of an impact on wear resistance as well as an impact on rolling resistance. From this viewpoint, the ratio TR1/TRb is more preferably not less than 1.70 and not greater than 1.90, and further preferably not less than 1.75 and not greater than 1.85.

As apparent from the above description, the present invention provides the tire 2 that can achieve improvement in high-speed durability as well as suppression of an impact on rolling resistance. The present invention exhibits significant effects on the tire 2 having a speed symbol not less than W.

[EXAMPLE]

The following will describe the present invention in more detail by means of an example and the like, although the present invention is not limited to the example.

[Example and Comparative Example]

There were obtained tires according to an example and a comparative example, each having the basic configuration shown in FIG. 1 and specifications indicated in Table 1. There were prepared two types of tires different in size (tire sizes: 255/40ZR20 and 285/35R20) for each of the examples.

According to the comparative example, a band cord receiving a load on a flat drum was spirally wound to shape a preform of a band, and then a portion corresponding to a crown portion was increased in diameter and a portion corresponding to a shoulder portion was decreased in diameter in the drum to finish the shape of a band. The band cord at the position P70 was not stretched with the contraction ratio SRs of 0%.

In contrast, the example adopted a drum having a certain profile in consideration of a shape of a band in a tire, and a band cord was wound at constant tension from a first end to a second end of the band to shape the band. The band was thus formed such that the contraction ratio SRs of the band cord at the position P70 was equal to the contraction ratio SRc of the band cord on the equator plane. The contraction ratio SRc of the band cord on the equator plane was equal to that according to the comparative example.

[Rolling Resistance]

Using a rolling resistance testing machine, a rolling resistance coefficient (RRC) was measured when each test tire (tire size: 285/35R20) ran on the drum at a speed of 80 km/h under the following conditions. The results are shown in the cells for "RRC" in Table 1 as indexes assuming that the comparative example has 100. The larger the numerical value is, the lower the rolling resistance of the tire is.

| Rim width: | 20 × 10.0J |
| Internal pressure: | 210 kPa |
| Vertical load: | 6.28 kN |

[High-Speed Durability]

Each test tire (tire size: 285/35R20) was fitted on a rim (size: 20 × 10.5J), and was filled with air to have an internal pressure of 200 kPa. The tire was mounted to a drum running test machine so as to have a camber angle. The camber angle was set to 2 degrees. Each tire receiving a vertical load of 4.86 kN ran on a drum (drum diameter: 5.0 m) at a gradually increased speed until the tire became incapable of running. The results are shown in the cells for "high-speed durability" in Table 1 as indexes assuming that the comparative example has 100. The larger the numerical value is, the better the high-speed durability is.

[Uneven Wear Resistance]

Each test tire (tire size: 255/40ZR20) was fitted on a rim (size: 20 × 10.0J), and was filled with air to have an internal pressure of 220 kPa. The tire was mounted to a drum running test machine. Each tire receiving a vertical load of 7.20 kN ran at a speed of 100 km/h on the drum (drum diameter: 5.0 m) having a running surface formed by an asphalt road surface. After running 30 km, the profile of the tread surface was measured by means of laser scanning to measure a wear amount of the shoulder portion. The results are shown in the cells for "uneven wear resistance" in Table 1 as indexes assuming that the comparative example has 100. The larger the numerical value is, the better the high-speed durability is.

[Ground-Contact Pressure Distribution]

Each test tire (tire size: 255/40ZR20) was fitted on a rim (size: 20 × 10.0J), and was filled with air to have an internal pressure of 200 kPa. The tire was mounted to a ground-contact pressure measurement test machine so as to have a camber angle. The camber angle was set to 2 degrees. Ground-contact pressure distribution was measured in a state where a vertical load of 6.40 kN was applied to the tire. There was obtained total ground-contact pressure in a ground-contact width direction in the shoulder portion. The results are shown in the cells for "ground-contact pressure distribution" in Table 1 as indexes assuming that the comparative example has 100. The smaller the numerical value is, the lower the total ground-contact pressure is.

[Table 1]

|  | Comparative example | Example |
|---|---|---|
| TR1/Wa[-] | 5.4 | 6.0 |
| TR2/TR1[-] | 0.52 | 0.38 |
| TR3/TR1[-] | 0.22 | 0.11 |
| TR1/TRb[-] | 1.50 | 1.81 |
| SRs/SRc[%] | 0 | 100 |
| F80[-] | 1.50 | 1.25 |
| RW1/Wa[-] | 0.20 | 0.20 |
| RW2/Wa[-] | 0.17 | 0.20 |
| RW3/Wa[-] | 0.13 | 0.10 |
| RRC | 100 | 106 |
| High-speed durability | 100 | 114 |
| Uneven wear resistance | 100 | 120 |
| Ground-contact pressure | 100 | 22 |

As shown in Table 1, the example achieves improvement in high-speed durability and suppression of an impact on wear resistance as well as an impact on rolling resistance. The comprehensive evaluation clarifies superiority of the present invention.

INDUSTRIAL APPLICABILITY

The above technique, which achieves improvement in high-speed durability as well as suppression of an impact on rolling resistance, is applicable to various tires.

REFERENCE SIGNS LIST

| | |
|---|---|
| 2 | tire |
| 4 | tread |
| 10 | bead |
| 12 | carcass |
| 14 | belt |
| 16 | band |
| 44, 46, 48 | belt ply |
| 50 | belt cord |
| 54 | full band |
| 56 | band cord |
| 60 | tread surface |
| 64 | crown portion |
| 66 | middle portion |
| 68 | shoulder portion |
| 70 | corner portion |

**Claims**

1. A tire comprising a pair of beads, a carcass extending between the pair of beads, a tread positioned radially outside the carcass and configured to come into contact with a road surface, a belt positioned radially inside the tread and radially outside the carcass, and a band positioned radially between the tread and the belt, wherein

   a state where the tire is fitted on a normal rim and an internal pressure of the tire is adjusted to 92% of a normal internal pressure, and no load is applied to the tire is a standard state,
   the tread has an outer surface including a crown portion positioned at an axial center, a pair of middle portions positioned axially outside the crown portion, and a pair of shoulder portions positioned axially outside the middle portions, respectively,
   in a meridian cross-section of the tire in the standard state of the tire,
   the crown portion has a contour represented by an arc having a center on an equator plane,
   each of the middle portions has a contour represented by an arc tangent to the arc representing the contour of the crown portion,
   each of the shoulder portions has a contour represented by an arc tangent to the arc representing the contour of the middle portion,
   positions on an outer surface of the tire corresponding to axially outer ends of a ground-contact surface of the tire obtained by applying a vertical load of 75% of a normal load to the tire in the standard state and bringing the tire into contact with a flat surface are ground-contact reference ends, and an axial distance from first one of the ground-contact reference ends to second one of the ground-contact reference ends in the tire is an axial width Wa of the ground-contact surface,
   the arc representing the contour of the crown portion has a radius TR1 not less than 5 times and not greater than 7 times the axial width Wa,
   the belt includes a belt cord inclined from a circumferential direction, the belt cord is a steel cord,
   the band includes a band cord extending substantially in the circumferential direction, the band cord is an organic fiber cord, and
   at a position corresponding to 70% of a maximum width of the tire in the standard state, the band cord has a contraction ratio not less than 70% and not greater than 130% of a contraction ratio of the band cord on the equator plane of the tire.

2. The tire according to claim 1, wherein

   in the ground-contact surface of the tire, a ratio of a center ground-contact length in a center of a ground-contact width of the ground-contact surface to a reference ground-contact length at a position corresponding to 80% of the ground-contact width of the ground-contact surface is a shape index F80, and
   the shape index F80 is not less than 1.10 and not greater than 1.40.

3. The tire according to claim 1or 2, wherein

   a ratio TR2/TR1 of a radius TR2 of the arc representing the contour of the middle portion to the radius TR1 of the arc representing the contour of the crown portion is not less than 0.35 and not greater than 0.40, and a ratio TR3/TR1 of a radius TR3 of the arc representing the contour of the shoulder portion to the radius TR1 of the arc representing the contour of the crown portion is not less than 0.09 and not greater than 0.13.

4. The tire according to any one of claims 1 to 3, wherein

   a ratio RW1/Wa of an axial distance RW1 from the equator plane to a boundary of the crown portion and the middle portion to the axial width Wa of the ground-contact surface is not less than 0.15 and not greater than 0.25, and a ratio RW3/Wa of an axial distance RW3 from a boundary of the middle portion and the shoulder portion to the ground-contact reference end to the axial width Wa is not less than 0.10 and not greater than 0.15.

5. The tire according to any one of claims 1 to 4, wherein

   in the meridian cross-section of the tire in the standard state, a ratio TR1/TRb of the radius TR1 of the arc representing the contour of the crown portion to a radius TRb of an arc having a center on the equator plane of the tire and passing through an equator and the ground-contact reference end of the tire is not less than 1.66 and not greater than 1.96.

FIG. 1

EP 4 755 658 A1

# FIG. 2

# FIG. 3

EP 4 755 658 A1

# FIG. 4

## FIG. 5

FIG. 6

FIG. 7

# FIG. 8

Europäisches
Patentamt

European
Patent Office

Office européen
des brevets

# EUROPEAN SEARCH REPORT

**Application Number**

EP 25 21 7621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 299 340 A1 (SUMITOMO RUBBER IND [JP]) 3 January 2024 (2024-01-03) * paragraphs [0014], [0133] - [0134], [0154] - [0155], [0201], [0259]; claims; figures * | 1-5 | INV. B60C3/00 B60C11/00 B60C11/03 B60C3/04 B60C9/22 |
| A | JP 2024 005773 A (SUMITOMO RUBBER IND) 17 January 2024 (2024-01-17) * the whole document * | 1-5 | |
| A | JP 2024 031211 A (SUMITOMO RUBBER IND) 7 March 2024 (2024-03-07) * paragraph [0045]; claims; figures * | 1-5 | |
| A | US 5 803 999 A (SHIBATA KOUJI [JP]) 8 September 1998 (1998-09-08) * column 2, lines 37-56; claims; figures * | 1-5 | |
| A | JP H04 87802 A (SUMITOMO RUBBER IND) 19 March 1992 (1992-03-19) * claims; figures * | 1-5 | |

**TECHNICAL FIELDS SEARCHED (IPC)**

B60C

The present search report has been drawn up for all claims

| Place of search | Date of completion of the search | Examiner |
|---|---|---|
| Munich | 27 April 2026 | Thanbichler, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7621

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2026

| Patent document cited in search report | | | Publication date | Patent family member(s) | | | Publication date |
|---|---|---|---|---|---|---|---|
| EP 4299340 | A1 | | 03-01-2024 | NONE | | | |
| JP 2024005773 | A | | 17-01-2024 | NONE | | | |
| JP 2024031211 | A | | 07-03-2024 | NONE | | | |
| US 5803999 | A | | 08-09-1998 | DE | 69700927 | T2 | 20-04-2000 |
| | | | | EP | 0790142 | A1 | 20-08-1997 |
| | | | | JP | 3165651 | B2 | 14-05-2001 |
| | | | | JP | H09277804 | A | 28-10-1997 |
| | | | | US | 5803999 | A | 08-09-1998 |
| JP H0487802 | A | | 19-03-1992 | JP | 2966488 | B2 | 25-10-1999 |
| | | | | JP | H0487802 | A | 19-03-1992 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016041563 A